# EUROPÄISCHE PATENTSCHRIFT

(11) **EP 1 221 365 B1**
(45) Veröffentlichungstag und Bekanntmachung des Hinweises auf die Patenterteilung: **07.04.2004**
(21) Anmeldenummer: 01129926.0
(22) Anmeldetag: 17.12.2001
(51) Int. Cl.: B29C 51/26, B29C 51/44, B29C 51/38

(54) **Kombinierte Form-/Stanzstation zum Formen und Ausstanzen von Behältern aus einer Folienbahn aus thermoplastischem Kunststoff**
Combined forming and die cutting station for forming and die cutting of containers from a web of thermoplastic material
Poste de moulage et de poinçonnage combiné pour mouler et poinçonner des récipients à partir d' une bande en matière thermoplastique

(30) Priorität: 03.01.2001 DE 10100119
(43) Veröffentlichungstag der Anmeldung: 10.07.2002
(73) Patentinhaber: Adolf Illig Maschinenbau GmbH & Co. KG, 74081 Heilbronn (DE)
(72) Erfinder: Schlimgen, Stefan, 74080 Heilbronn-Böckingen (DE); Firzlaff, Michael, 74223 Flein (DE)

(56) Entgegenhaltungen:
- EP-A- 0 947 306
- EP-A- 1 025 978
- DE-A- 2 010 260
- DE-A- 2 020 472
- DE-A- 2 531 236
- DE-A- 3 226 841
- DE-A- 19 710 475
- DE-B- 1 276 900
- US-A- 3 189 399
- US-A- 3 802 819
- US-A- 4 560 339
- US-A- 4 565 513
- US-A- 5 975 877
- US-A- 6 135 756

## Beschreibung

Die Erfindung betrifft eine kombinierte Form- und Stanzstation zum Formen und Ausstanzen von Behältern aus einer Folienbahn aus thermoplastischem Kunststoff nach der Gattung des Hauptanspruches.

Aus der US - A - 5,975,877 ist es bekannt, den Formtisch mittels insgesamt vier Kurvenscheiben zu bewegen. Ein Kurvenscheibenpaar führt eine Schwenkbewegung von zwei Seitenwangen um einen Drehpunkt herbei, an denen der Formtisch mit einer Werkzeughälfte verschiebbar über das zweite Kurvenscheibenpaar geführt ist. Nachteilig bei dieser Gestaltung ist es, dass außer dem schweren Formtisch mit der angebauten einen Werkzeughälfte auch die zwei relativ stabilen und damit schweren Seitenwangen taktweise bewegt werden müssen. Insbesondere bei hohen Taktzahlen treten sehr hohe Kräfte auf, die vom Beschleunigen und Verzögern der Massen herrühren. Diese wirken auf alle Antriebselemente und führen zu deren Verschleiß und erfordern einen hohen Energiebedarf. Für einen genauen Bewegungsablauf der Schwenkbewegung beider Seitenwangen und der Hubbewegung des Formtisches zu den Seitenwangen sind insgesamt vier komplizierte, genau zueinander zu positionierende Kurvenscheiben erforderlich.

Aus der CA 2 240 428 A1 ist eine Form- und Stanzstation bekannt, bei der über drei Kurvenbahnen eine Schwenkbewegung sowie lineare Bewegungsabläufe in den Endlagen erreicht werden. Der Aufwand zur Herstellung dieser exakt aufeinander abzustimmenden Kurvenbahnen ist sehr hoch. Der Durchmesser der Kurvenrolle ist beschränkt, weil sonst die Kurvenbahnen bzw. Kurvenbahnabschnitte ineinander laufen. Trotzdem entstehen örtlich schmale Bereiche zwischen den Kurvenbahnabschnitten, die bruchempfindlich sind, da hohe Kräfte über die Kurvenrollen auf sie einwirken. Die Kurvenrollen sind einem Richtungswechsel bei ihrer Bewegung in der Kurvenbahn unterworfen, wodurch ihre Lebensdauer und die der Kurvenbahn reduziert wird.

Der Erfindung liegt die Aufgabe zugrunde, unter Beibehaltung des Vorteils, dass sich der Abstand Schwerpunkt - Schwenkpunkt während des Schwenkens zunächst verringert und gegen Ende des Bewegungsablaufes wieder vergrößert, die Kosten für die erforderlichen Kurvenbahnen sowie den Verschleiß von Bauteilen zu reduzieren. Eine aufwendige Justierung von komplizierten Kurvenbahnen zueinander sollte nicht erforderlich sein.

Diese Aufgabe wird gelöst durch die Merkmalen des Anspruches 1.

Verschiedene Ausführungsformen der kombinierten Form- und Stanzstation sind anhand der schematischen Zeichnungen näher beschrieben. Es zeigen:
- Figur 1 und 2:: eine Seitenansicht der Form- und Stanzstation in zwei Stellungen.
- Figur 3:: einen Querschnitt durch die Form- und Stanzstation.
- Figur 4:: eine Seitenansicht der Form- und Stanzstation bei einer Variante des Antriebes.
- Figur 5 und 6: zwei Formen der Führungsbahn
- Figur 7: einen Schnitt durch eine Nutkurve
- Figur 8: eine Variante der Gestaltung der Form- und Stanzstation.

Die kombinierte Form- und Stanzstation 1 ist Teil einer Thermoformmaschine, die neben einer Heizeinrichtung auch eine Transporteinrichtung zum intermittierenden Transport der Folienbahn 2 aufweist. Diese Folienbahn 2 gelangt abschnittsweise in die kombinierte Form- und Stanzstation 1 und wird mit Hilfe der beiden Werkzeughälften 3, 4 zu Behältern 28 tiefgezogen. Durch eine nach dem Formen erfolgende geringe Schließbewegung der beiden Werkzeughälften 3, 4 erfolgt das Ausstanzen der Behälter 28. Eine Werkzeughälfte 3 mit den formgebenden Bauteilen ist auf einem Formtisch 5 befestigt, der höhenmäßig verschiebbar und schwenkbar ausgebildet ist. Hierzu ist der Formtisch 5 mit zwei Trägerplatten 6 versehen, an denen je eine Führung 7, die als Rundführung oder Flachführung ausgebildet ist, befestigt ist. Die Führungen 7 gleiten in je einem kombinierten Dreh- und Schiebegelenk 8, das drehbar um einen Drehpunkt 26 im Gestell 9 gelagert ist.

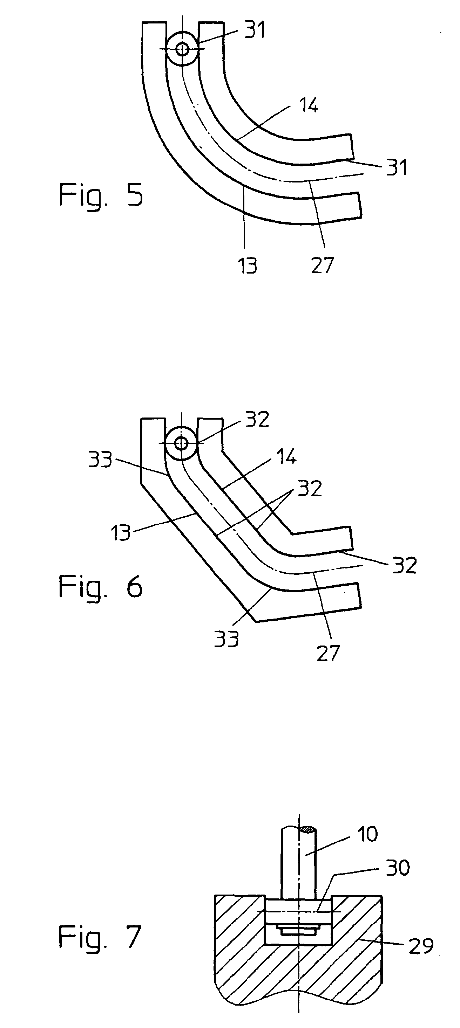

Zwischen jedem kombinierten Dreh- und Schiebegelenks 8 und der Oberkante der auf dem Formtisch 5 angeordneten Werkzeughälfte 3 - im geschlossenen Zustand betrachtet - ist je eine Führungsbahn 27 vorgesehen. Je nach geometrischen Verhältnissen kann es vorteilhaft oder erforderlich sein, die Führungsbahn 27 mit einem oberen Teilbereich über die Oberkante der einen Werkzeughälfte 3 hinaus zu verlängern, wozu dann das Gestell 9 ebenfalls nach oben verlängert wird. An den Trägerplatten 6 sitzt je ein Zapfen 10. Auf diesem sitzen je eine Kurvenrolle 30 oder vorzugsweise zwei Kurvenrollen 11, 12, die sich auf je einer die Führungsbahn 27 bildenden Nutkurve 29 (siehe Figur 7) bzw. auf Kurvenbahnen 13, 14 (siehe Figur 5,6) abstützen. Wenn nur eine Kurvenrolle 30 angeordnet ist, die in einer Nutkurve 29 läuft, hat dies den Nachteil eines eventuellen Drehrichtungswechsels der Kurvenrolle 30 während des Schwenkens, der erhöhten Verschleiß zur Folge hat. Vorteilhafter ist deshalb die geteilte Gestaltung der Führungsbahn 27 durch Kurvenbahnen 13, 14 mit eindeutiger Drehrichtung der zugeordneten Kurvenrolle 11, 12. An jedem Zapfen 10 greift ein Hebel oder eine Lasche an, die die Schwenkbewegung des Formtisches 5 einleiten.

Es gibt verschiedene Gestaltungen und Antriebsarten des Hebels bzw. der Lasche und unterschiedliche Gestaltungen der Führungsbahn 27, auf die nachfolgend eingegangen wird. Gemeinsam ist eine im Gestell 9 gelagerte Querwelle 16 mit daran befestigten Kurvenscheiben 17, die den hochgeschwenkten Formtisch 5 unterstützen und die Stanzbewegung ausführen.

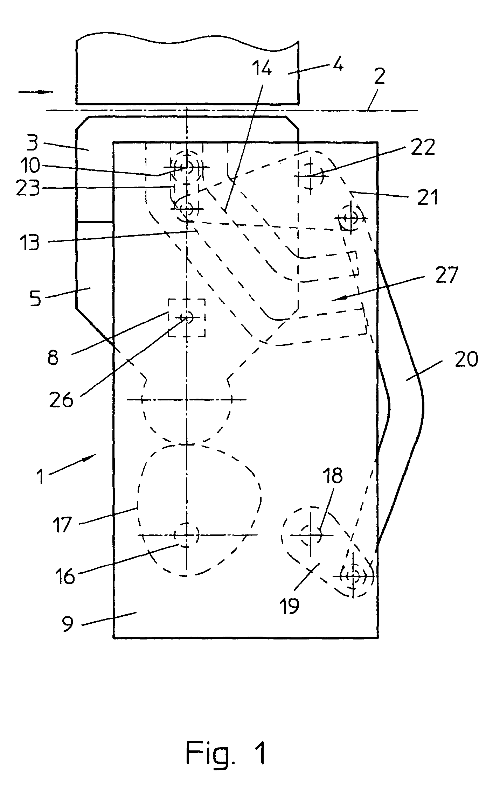

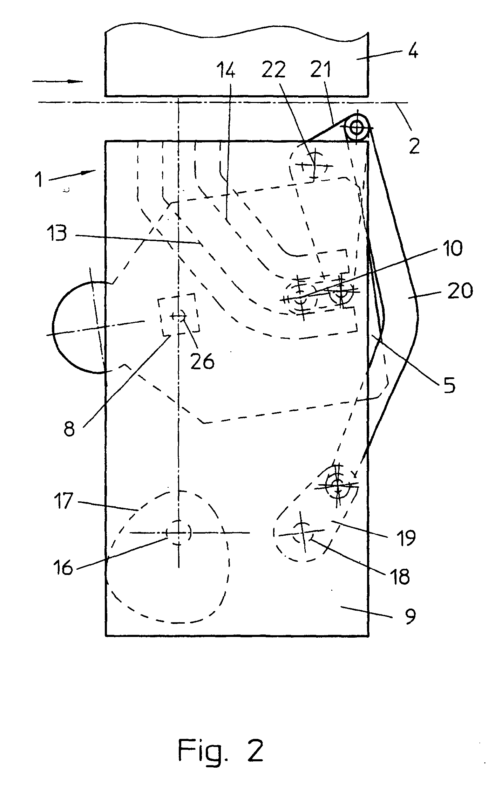

Die Figuren 1 und 2 zeigen einen Antrieb für die Schwenkbewegung des Formtisches 5 in der Weise, dass auf einer über einen Motor 15 angetriebenen Querwelle 18 beiderseits je ein Hebel 19 sitzt, an dem ein Lenker 20 drehbar gelagert ist. Dieser ist andererseits drehbar am Hebel 21 befestigt. Beide Hebel 21 sitzen starr an der Querwelle 22 und tragen eine zu Ihnen schwenkbare Lasche 23, die auf dem Zapfen 10 drehbar gelagert ist. Durch Verdrehen der Querwelle 18 wird der Formtisch 5 zwischen den Endstellungen, dargestellt in den Figuren 1 und 2, bewegt.

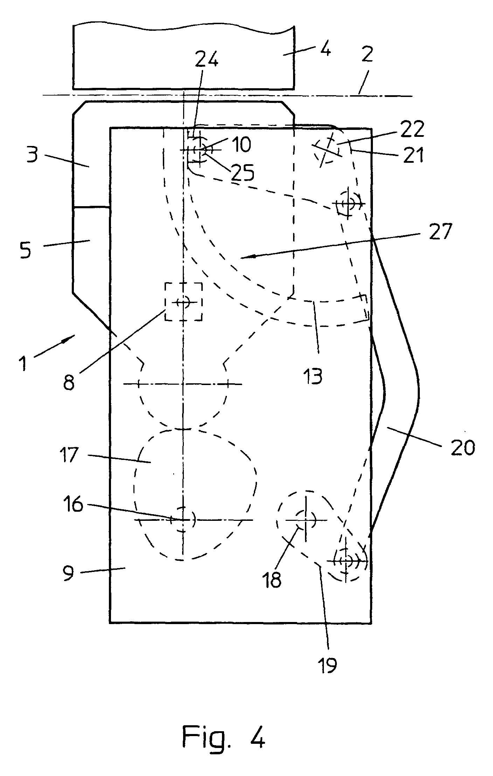

Auf die Lasche 23 kann verzichtet werden, wenn der Hebel 21 eine gabelförmige Ausnehmung 24 gemäß Figur 4 aufweist, die am Zapfen 10 direkt oder an einer auf diesem angeordneten Kurvenrolle 25 angreift. Bei dieser Gestaltung ist es möglich, mit einer Kurvenbahn 13 auszukommen, die kreisförmig gestaltet ist (siehe Figur 4).

Bei der Antriebsvariante gemäß den Figuren 1 und 2 ist die Gestaltung der beiden Kurvenbahnen 13, 14 in verschiedenen Ausführungen möglich, z. B. kreisförmig (Figur 5) mit geraden Auslaufbereichen 31, oder mit drei geraden Bereichen 32 mit Radiusübergängen 33 (Figur 6). Solche Gestaltungen sind fertigungstechnisch relativ einfach herzustellen. Kombinationen dieser Gestaltung sind möglich.

Die Gestaltung der Führungsbahn 27 gemäß den Figuren 5 und 6 hat Einfluss auf die auftretenden Geschwindigkeiten, Beschleunigungen und Kräfte auf die betroffenen Bauteile während der Schwenkbewegung. Man kann eine Optimierung dieser Werte je nach geometrischer Ausführung - auch des Werkzeuges bezüglich Breite - herbeiführen. Die Querwelle 22 ist so außerhalb des Formtisches 5 angeordnet, dass keine Kollision mit diesem während des Schwenkens eintritt. Auch um diese Kollision zu verhindern wird die Gestalt dieser Kurvenbahnen 13, 14 entsprechend ausgewählt.

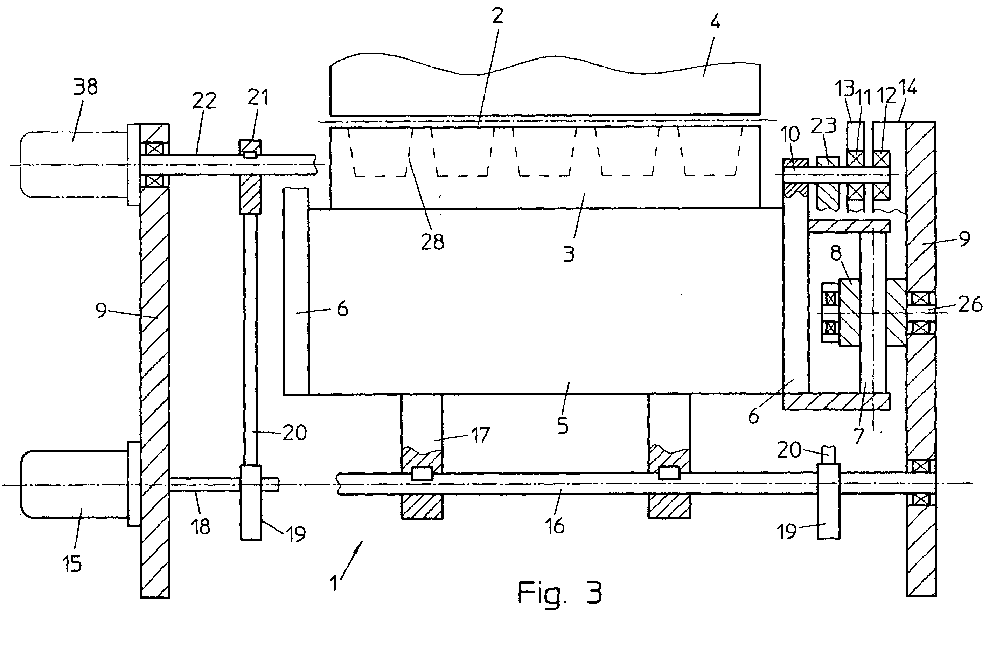

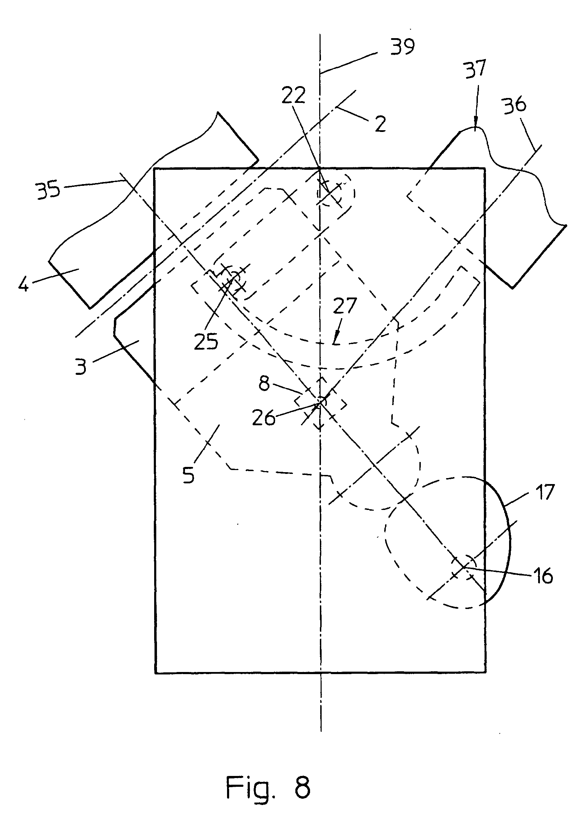

In Figur 8 ist eine Gestaltungsmöglichkeit der kombinierten Form- und Stanzstation dargestellt, die Vorteile bezüglich der Kinematik bietet. Die Symmetrieachse 35 der Form- und Stanzstation 1 ist zur Vertikalen 39 geneigt angeordnet. Ebenfalls geneigt in vorzugsweise gleichem Winkel zur Vertikalen 39 ist die Symmetrieachse 36 der Stapeleinrichtung 37. Auf diese Weise wirkt beim Absenken des Formtisches 5 dessen Schwerkraft beschleunigend, also energiesparend bezüglich der aufzuwendenden Antriebsenergie. Während der zweiten Hälfte der Schwenkbewegung in Richtung Stapeleinrichtung 37 wird der Formtisch 5 angehoben, sodass dessen Schwung gebremst wird und weniger Energie zum Bremsen erforderlich ist. Es entsteht eine Art Pendelbewegung. Vor allem diese Bauform ermöglicht einen Antrieb der Querwelle 22 auf direkte Weise, wie er in Figur 3 in Form des Antriebes 38 angedeutet ist. Der Antrieb 38 ist vorzugsweise als Servomotor ausgebildet. Auf die Bauteile 18, 19, 20 kann dadurch verzichtet werden, sodass eine kostengünstige Lösung entsteht. Dieser direkte Antrieb kann prinzipiell bei allen gezeigten Ausführungen eingesetzt werden.

## Patentansprüche

1. Kombinierte Form- und Stanzstation zum Formen und Ausstanzen von Behältern (28) aus einer Folienbahn (2) aus thermoplastischem Kunststoff, mit einem schwenkbaren Formtisch (5) zur Aufnahme der einen Werkzeughälfte (3), wobei die Form- Stanzstation so ausgebildet ist, dass das Schwenken um einen fixen Drehpunkt (26), eine Verschiebung des Formtisches (5) relativ zum Drehpunkt (26) und die Führung des Formtisches (5) mittels je einer an beiden Seiten des Formtischen (5) angeordneten Führungsbahn (27) erfolgt, **dadurch gekennzeichnet, dass** der Drehpunkt (26) auf beiden Seiten des Formtisches (5) als kombiniertes Dreh- und Schiebegelenk (8) ausgebildet ist, wobei diese Dreh- und Schiebegelenke (8) in einem ortsfesten Gestell (9) angeordnet sind, das zwischen dem Drehpunkt (26) und der Oberkante der einen, in geschlossenem Zustand betrachteten Werkzeughälfte (3) die Führungsbahnen (27) trägt.

2. Kombinierte Form- und Stanzstation nach Anspruch 1, **dadurch gekennzeichnet, dass** sich die Führungsbahnen (27) über die Oberkante der einen Werkzeughälfte (3) hinaus in Richtung der anderen Werkzeughälfte (4) erstrecken.

3. Kombinierte Form- und Stanzstation nach Anspruch 1 oder 2, **dadurch gekennzeichnet, dass** die Führungsbahnen (27) von einer Nutkurve (29) oder von zwei Kurvenbahnen (13, 14) mit gerade verlaufenden Bereichen (32) gebildet werden, die Radiusübergänge (33) aufweisen.

4. Kombinierte Form- und Stanzstation nach Anspruch 1 oder 2, **dadurch gekennzeichnet, dass** die Führungsbahnen (27) von einer Nutkurve (29) oder von zwei Kurvenbahnen (13, 14) mit kreisförmiger Gestalt gebildet werden, die gerade verlaufende Auslaufbereiche (31) aufweisen.

5. Kombinierte Form- und Stanzstation nach einem der Ansprüche 1 bis 4, **dadurch gekennzeichnet, dass** zum Schwenken des Formtisches (5) angetriebene Hebel (21), die direkt oder über eine zwischengeschaltete Lasche (23) am Tisch (5) angreifen, angeordnet sind, die auf einer Querwelle (22) sitzen und mit dieser verbunden sind.

6. Kombinierte Form- und Stanzstation nach Anspruch 5, **dadurch gekennzeichnet, dass** zum Schwenken der Hebel (21) Lenker (20) angeordnet sind, die mit schwenkbaren, auf einer angetriebenen Querwelle (18) angeordneten Hebeln (19) in Verbindung stehen.

7. Kombinierte Form- und Stanzstation nach Anspruch 5, **dadurch gekennzeichnet, dass** zum Schwenken der Hebel (21) ein vorzugsweise als Servomotor ausgebildeter Antrieb (38) vorgesehen ist, der die Querwelle (22) antreibt.

8. Kombinierte Form- und Stanzstation nach Anspruch 1 oder 2, **dadurch gekennzeichnet, dass** die Führungsbahnen (27) durch eine einzige Kurvenbahn (13) gebildet werden, die kreisförmig gestaltet ist und dass zum Schwenken des Formtisches (5) zwei schwenkbaren Hebel (21) vorgesehen sind, die eine schlitzförmige Ausnehmung (24) aufweisen, die an je einem am Tisch (5) angeordneten Zapfen (10) angreift.

9. Kombinierte Form- und Stanzstation nach Anspruch 8, **dadurch gekennzeichnet, dass** zum Schwenken der Hebel (21) ein vorzugsweise als Servomotor ausgebildeten Antrieb (38) vorgesehen ist, der die Querwelle (22) antreibt.

## Claims

1. Combined moulding and punching station for moulding and punching out containers (28) from a foil web (2) of thermoplastic plastics material, with a pivotable mould table (5) for mounting one tool half (3), wherein the moulding and punching station is so constructed that the pivotation about a fixed fulcrum (26), a displacement of the mould table (5) relative to the fulcrum (26) and the guidance of the mould table (5) is carried out by means of a respective guide path (27) arranged at each of the two sides of the mould table (5), **characterised in that** the fulcrum (26) is formed at both sides of the mould table (5) as a combined rotary and slide joint (8), wherein these rotary and slide joints (8) are arranged in a stationary frame (9) which carries the guide paths (27) between the fulcrum (26) and the upper edge of the one tool half (3) considered in closed state.

2. Combined moulding and punching station according to claim 1, **characterised in that** the guide paths (27) extend above the upper edge of the one tool half (3) out in direction of the other tool half (4).

3. Combined moulding and punching station according to claim 1 or 2, **characterised in that** the guide paths (27) are formed by a groove cam (29) or by two cam tracks (13, 14) with rectilinearly extending regions (32), which have radiused transitions (33).

4. Combined moulding and punching station according to claim 1 or 2, **characterised in that** the guide paths (27) are formed by a groove cam (29) or by two cam tracks (13, 14) with circular shape, which have rectilinearly extending outlet regions (31).

5. Combined moulding and punching station according to one of claims 1 to 4, **characterised in that** driven levers (21), which engage the table (5) directly or by way of an interposed strap (23) and which are seated on a transverse shaft (22) and connected therewith, are arranged for pivotation of the mould table (5).

6. Combined moulding and punching station according to claim 5, **characterised in that** links (20), which are connected with pivotable levers (19) arranged on a driven transverse shaft (18), are arranged for pivotation of the levers (21).

7. Combined moulding and punching station according to claim 5, **characterised in that** a drive (38), which is preferably constructed as a servomotor and which drives the transverse shaft (22), is provided for pivoting the levers (21).

8. Combined moulding and punching station according to claim 1 or 2, **characterised in that** the guide paths (27) are formed by a single cam track (13), which is formed to be circular, and that two pivotable levers (21), which have a slot-shaped recess (24) engaging at a respective pin (10) arranged at the table (5), are provided for pivoting the mould table (5).

9. Combined moulding and punching station according to claim 8, **characterised in that** a drive (38), which is preferably constructed as a servomotor and which drives the transverse shaft (22), is provided for pivoting the levers (21).

## Revendications

1. Poste de moulage et de découpage combinés pour former et découper des récipients (28) dans une bande (2) de matière thermoplastique, comprenant un plateau de moulage (5) pivotant pour recevoir une moitié d'outil (3),
le poste de moulage - découpage étant réalisé pour que le basculement autour d'un point fixe de rotation (26), entraîne un décalage du plateau de moulage (5) par rapport au point fixe de rotation (26) et le guidage du plateau de moulage (5) à l'aide d'un chemin de guidage respect (27) prévu de chaque côté du plateau de moulage (5),
**caractérisé en ce que**
sur les deux côtés du plateau de moulage (5) le point de rotation fixe (26) est une articulation combinée de rotation et de coulissement (8) dans un bati fixe (9) portant les chemins de guidage (27) entre le point de rotation fixe (26) et l'arête supérieure d'une moitié d'outil (3) à l'état fermé.

2. Poste de moulage et de découpage combinés selon la revendication 1,
**caractérisé en ce que**
les chemins de guidage (27) s'étendent par-dessus l'arête supérieure d'une moitié d'outil (3) en direction de l'autre moitié d'outil (4).

3. Poste de moulage et de découpage combinés selon la revendication 1 ou 2,
**caractérisé en ce que**
les chemins de guidage (27) sont formés par un chemin à rainure (29) ou deux chemins de came (13, 14) avec des zones droites (32) ayant des transitions courbes (33).

4. Poste de moulage et de découpage combinés selon la revendication 1 ou 2,
**caractérisé en ce que**
les chemins de guidage (27) sont formés par un chemin à rainure (29) ou deux chemins de came (13, 14) de forme circulaire, ayant des zones de sortie (31) droites.

5. Poste de moulage et de découpage combinés selon l'une des revendications 1 à 4,
**caractérisé par**
des leviers (21) entraînés pour basculer le plateau de moulage (5), agissant directement sur le plateau (5) ou par des pattes intermédiaires (23), ces leviers étant portés solidairement par un arbre transversal (22).

6. Poste de moulage et de découpage combinés selon la revendication 5,
**caractérisé par**
des bras (20) prévus pour basculer les leviers (21), ces bras coopérant avec des leviers (19) installés de manière pivotante d'un arbre transversal (18) entraîné.

7. Poste de moulage et de découpage combinés selon la revendication 5,
**caractérisé par**
un entraînement (38) notamment sous forme de servomoteur pour pivoter les leviers (21), et assurer l'entraînement de l'arbre transversal (22).

8. Poste de moulage et de découpage combinés selon les revendications 1 ou 2,
**caractérisé en ce que**
les chemins de guidage (27) sont formés par un seul chemin courbe (13) circulaire et pour basculer le plateau de moulage (5), deux leviers pivotants (21) ayant une cavité (24) en forme de fente coopèrent avec un embout (10) respectif prévu sur le plateau (5).

9. Poste de moulage et de découpage combinés selon la revendication 8,
**caractérisé par**
un entraînement (38) de préférence sous forme de servo moteur pour basculer le levier (21), cet entraînement assurant l'entraînement de l'arbre transversal (22).
